Europäisches Patentamt

European Patent Office

Office européen des brevets

(19)

(11) **EP 1 197 740 A1**

(12) **EUROPÄISCHE PATENTANMELDUNG**

| | |
|---|---|
| (43) Veröffentlichungstag:<br>**17.04.2002 Patentblatt 2002/16** | (51) Int Cl.$^{7}$: **G01N 1/20**, G01N 15/04 |

(21) Anmeldenummer: **01710049.6**

(22) Anmeldetag: **05.10.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **12.10.2000 DE 10051715**

(71) Anmelder: **Gust, Giselher, Prof. Dr.**
**24146 Kiel (DE)**

(72) Erfinder: **Gust, Giselher, Prof. Dr.**
**24146 Kiel (DE)**

(54) **Verfahren zur systematischen Erfassung von Stoffen mit Partikelcharakter, die sich in einem strömenden Fluid mit einer Vertikalkomponente bewegen, und Vorrichtung zur Verfahrensdurchführung**

(57) Bekannt ist, dass die sich in Partikelfallen über die Zeit aufbauende Massenakkumulation nach Gesetzmäßigkeiten erfolgt, die durch Kombinationen von Fallen-, Strömungs- und Partikeleigenschaften am Sammelort bestimmt sind (Akkumulationsgleichungen nach Gust et al.). Rückschlüsse auf den vertikalen in-situ-Massenfluss von n unterschiedlichen Partikelgruppen sind jedoch nicht möglich. Auch der bekannte Einsatz mehrerer Fallen zur statistischen Absicherung des Sammelergebnisses führt zu keiner Aussage über diesen relevanten Parameter. Deshalb ist bei dem erfindungsgemäßen Verfahren vorgesehen, dass an einer der Anzahl n der unterschiedlichen Partikelgruppen ($P_n$) entsprechenden Anzahl N von Messorten ($MP_N$), an denen alle n Partikelgruppen ($P_n$) auftreten, mit N (N = n) typenunterschiedlichen Partikelfallen ($T_N$) die Massenakkumulationen ($M_{TN}$) und das Sink-/Steiggeschwindigkeitsspektrum (VW) der n Partikelgruppen ($P_n$) erfasst werden. Nach Aufstellung und Lösung eines linear unabhängigen Systems von [N] Akkumulationsgleichungen unter Einbeziehung der bekannten Kalibrierungs- und Messgrößen können der gesuchte in-situ-Massenfluss ($(ISM)_{Pn}$) und der erfassbare in-situ-Gesamtmassenfluss $(ISM)_P$ ermittelt werden. Eine bevorzugte Vorrichtung sieht eine feste Zuordnung von N Fallentypen (möglich für Sink- oder Steigstoffe) in einem kompakten und einfach zu handhabenden Fallenmultiplett vor.

$$[N]: M_{TN} = \sum_{n} (M_T)_n = \sum_{n} y_N (u_a; w_{sn}) con\, t_N (Q_N(u_a) + A_{SN} w_{sn})$$

$(A_{SN}, H_N, D_N, Q_N, y_N) = f\,(cal.) \qquad N = I, II, III ... N\ (T_N)$

$(u_a, t_N, M_{TN}, w_{sn}) = f\,(meas.) \qquad n = 1, 2, 3 ... n\ (P_n)$

$\rightarrow con \rightarrow con \cdot w_{sn} = (ISM)_{Pn} = f\,(Pn) \qquad n = N$

$\sum_{n} (ISM)_{Pn} = ISM_P$

Fig.1

EP 1 197 740 A1

**Beschreibung**

Die Erfindung bezieht sich auf ein Verfahren zur systematischen Erfassung von Stoffen mit Partikelcharakter, die sich in einem strömenden Fluid mit einer Vertikalkomponente bewegen, auf Basis der Akkumulationsgleichungen nach Gust et al. und Westrich für die Massenakkumulation von Partikelgruppen in einer kalibrierten Partikelfalle unter Strömungseinfluss und unter Kenntnis der aktuellen Werte der Fallen- und Strömungsparameter und auf eine Vorrichtung zur Verfahrensdurchführung.

Stoffe mit Partikelcharakter, die sich mit einer Vertikalkomponente in strömenden Gewässern und Ozeanen bewegen, spielen eine wesentliche Rolle in sedimentologischen, biogeochemischen, biologischen, klimarelevanten, morphologischen sowie vielen weiteren Prozessen. Ihre systematische Erfassung führt u.a. zu detaillierten Aussagen zum globalen Zyklus organischen Kohlenstoffs und der Nährstoffe. Ebenso werden in vielen technischen Anlagen mit strömenden Fluiden Aussagen über den vertikalen Massenfluss vorhandener Stoffe mit Partikelcharakter gefordert. Im Rahmen der vorliegenden Ausführungen soll die Bezeichnung "Stoffe mit Partikelcharakter" so verstanden werden, dass es sich dabei sowohl um Feststoffpartikel im Sinn von "Teilchen" als auch um Gasstoffpartikel im Sinne von "Gasbläschen" oder um Kombinationen beider handeln kann. Je nach relativer Dichte der Partikelart erfährt diese im strömenden Fluid dann eine Abtriebskraft ("Sinkstoffe") oder eine Auftriebskraft ("Steigstoffe"). Im Stand der Technik wird jedoch vorwiegend die Gruppe der Sinkstoffe im Zusammenhang mit Partikelfallen behandelt, weshalb die folgenden Ausführungen ausschließlich hierauf Bezug nehmen. Die nach dem Stand der Technik zur Bestimmung des vertikalen Massenflusses eingesetzten Geräte (sogenannte "Partikelfallen") sammeln - selbst am gleichen Messort - individuell unterschiedliche Mengen der Sinkstoffe aufgrund der eingesetzten unterschiedlichen Sammel- und Extraktionsverfahren und -vorrichtungen. Dabei war bislang auch eher die qualitative und quantitative Materialzusammensetzung eines Sinkstoffes als beispielsweise der "in-situ-Massenfluss" seiner absinkenden Partikelgruppen im Sinne einer Kenntnis der aktuellen Sinkmenge und -vorgänge im Fluid gefragt. Die entsprechend genutzte Gleichung, nach der zur Ermittlung des sogenannten "Fallenflusses" die in der Partikelfalle eingefangene Partikelmasse durch die Sammelzeit und die Gesamtfläche der Fallenapertur (Öffnung einer Partikelfalle) zu teilen ist, erlaubt nur, den Massenfluss sinkender Partikel und zugehöriger Größen in der freien Fluidsäule rückwirkend zu berechnen, wenn das Fluid ruht.

Bewegt sich das partikeltragende Fluid mit einer Horizontalkomponente auf die im allgemeinen horizontal orientierte Fallenapertur zu, wird durch die Anströmgeschwindigkeit der aktuelle Sammelprozess in der Falle gegenüber dem Sink- oder Sedimentationsprozess in der freien Fluidsäule bzw. am Boden stark verändert. Es entsteht ein an die Außenströmung gekoppeltes Zirkulationsmuster im Eingangsbereich der Falle, der damit laufend von neuem Fluid durchströmt wird. Diese "Zirkulationszone" lässt im Fluid enthaltene sinkende Partikel nicht nur gravimetrisch sondern auch advektiv den Falleninnenraum erreichen, von wo aus sie teilweise aussedimentieren. Dies gilt für Partikel mit einer Sinkgeschwindigkeit größer als ca. 5 m/Tag, langsamere Partikel, deren Anteil am gesamten Massenfluss aber meist unter 10% liegt, können nur mit anderen Techniken erfasst werden. Der strömungsbeeinflusste Sammelvorgang der Sinkstoffe kann nicht von der klassischen Fallenflussgleichung bei ruhendem Fluid (s.o.) erfasst werden und spiegelt sich mathematisch in semi-empirischen "Akkumulationsgleichungen" wider, mit deren Hilfe aus der gemessenen Massenakkumulation in einem bekannten, kalibrierten Fallentyp der in-situ-Massenfluss einer einzelnen Partikelgruppe berechnet werden kann.

Dabei ist der Begriff "Fallentyp" im Sinne einer koeffizientenbezogenen, individuellen Fallenparameterauslegung als Untergruppe zur "Fallenart" im Sinne eines übergeordneten Fallenprinzips zu verstehen. Solche Akkumulationsgleichungen existieren für verschiedene Fallenarten, insbesondere für zylindrische und konische Fallen (vergleiche **Aufsatz I** von G. Gust et al. : "Mooring line motions and sediment trap hydromechanics: in-situ intercomparison of three common deployment designs" 1994, Deep Sea Research 41, 831-857 und **Aufsatz II** von G. Gust et al. "Particle accumulation in a cylindrical sediment trap under laminar and turbulent steady flow: An experimental approach" 1996, Aquatic Sciences 58, 297-326) und Tellerfallen (vgl. **Aufsatz III** von B. Westrich "Fluvialer Feststofftransport - Auswirkungen auf die Morphologie und Bedeutung für die Wassergüte", 1988, Schriftenreihe Wasser-Abwasser. 22 R. Oldenbourg Verlag, München, Wien, S. 24-29). Das Auffinden weiterer Akkumulationsgleichungen für andere Fallenarten ist derzeit auch Aufgabe der Forschung. Diese können dann ohne Weiteres in die vorliegende Erfindung einbezogen werden, da sie auf denselben Grundüberlegungen beruhen.

Insbesondere dem Aufsatz II können grundlegende Ausführungen für die Massenakkumulation von Partikelgruppen in einer kalibrierten Partikelfalle unter Strömungseinfluss als Basis zur vorliegenden Erfindung entnommen werden. Ein Extrakt zum erforderlichen Verständnis der Erfindung wird im Folgenden angeboten. Die in den Aufsätzen I und II aufgeführten Akkumulationsgleichungen und Messergebnisse zeigen, dass Sinkstofffallen mit zylindrischer und trichterförmiger Geometrie gegenüber Tellerfallen mit flachen, hydraulisch glatten oder rauen Oberflächen einen grundsätzlich unterschiedlichen Partikel-Sammelprozess aufweisen. So setzen sich bei Tellerfallen (vgl. beispielsweise **DE 197 37 448 A1**) die Partikel direkt aus der Flüssigkeit auf die Fallenoberfläche ab, sobald der Depositionsstress der sinkenden Partikel größer ist als die durch die Strömung erzeugte, dem entgegenwirkende Bodenschubspannung am Sammelort. Übersteigt die auf der Fallenoberfläche strömungserzeugte Bodenschubspannung diesen Wert, können die Partikel nicht mehr aussedimentieren. Erreicht mit steigender Strömungsgeschwindigkeit die Bodenschubspannung die kritische Bodenschubspannung, werden Partikel, die bereits auf der Sammelfläche gelandet waren, wieder erodiert. Die Tellerfallen geben daher über die Experimentdauer und Sammelflächengröße einen Massenmittelwert an, der von dem Depositionsstress der sinkenden Partikel, von der strömungserzeugten Schubspannung, von der kritischen Bodenschubspannung der abgelagerten Partikel, sowie den jeweiligen anfänglichen Konzentrationen der Partikelgruppen mit unterschiedlicher Sinkgeschwindigkeit abhängt. Demgegenüber führt bei Sinkstofffallen mit Hohlgeometrie der Akkumulationsprozess bei Strömung über ein im Inneren der Fallen existierendes und an die Außenströmung gekoppeltes Zirkulationsmuster, dessen Fluiddurchspülungsrate von der Anströmgeschwindigkeit des Fluids abhängt. Aus dem tiefsten Teil dieser Zirkulationszone wird ein durch die sogenannte "Yield-Funktion" beschreibbarer Teil der mitbewegten sinkenden Partikel in eine darunter liegende Ruhezone überführt, in der sich die Partikel nur noch mit der Sinkgeschwindigkeit abwärts bewegen und schließlich auf der Sammeloberfläche landen. Diese Art von Sammelprozess führt über die Experimentdauer zu einem kumulativen Anstieg der Fangmasse ("Massenakkumulation"). Die Ruhezone der Falle unterhalb der Zirkulationszone ist konstruktiv und funktionsmäßig erwünscht und existiert nur bei einem angemessenen Längen-Weiten-Verhältnis der Fallengeometrie.

Für eine **einzelne** aufrecht stehende Zylinderfalle wird unter diesen Bedingungen folgende Akkumulationsgleichung für einen Sinkstoff gefunden (Gust et al., 1996):

$$M_{TP} = \Sigma \, (M_T)_n = \Sigma \, y \, (u_a, w_{sn}) \, c_{0n} \, t \, (Q(u_a) + A_s w_{sn}) \qquad [1]$$

Für eine **einzelne** konische Falle wird eine Abhängigkeit ähnlicher Struktur aber mit zusätzlichen kontrollierenden Parametern angenommen :

$$MTP = \Sigma \, (M_T)_n = \Sigma \, (y \, (u_a, w_{sn}, TKE) \, c_{0n} \, t \, (Q(u_a) + A_s w_{sn})) \qquad [2]$$

Für eine **einzelne** Tellerfalle kann nach Westrich (1988) folgende Akkumulationsgleichung angegeben werden

$$M_{TP} = \Sigma \, (M_T)_n = \Sigma \, (c_{0n} \, w_{sn} \, (1 - \tau / \tau_d)) \qquad [3]$$

Die in den Gleichungen [1], [2] und [3] verwendeten Terme bedeuten:

- **Aktive Fallenapertur $A_s$:** Derjenige Teil der vollen Fallenapertur A, durch den die Partikel als Teil der Zirkulationszone in das Falleninnere transportiert werden.
- **Anströmgeschwindigkeit $u_a$:** Geschwindigkeit des die Falle anströmenden Fluids, in welche die Partikel eingebettet sind.
- **Fluiddurchspülungsrate $Q(u_a)$:** Die durch das Falleninnere transportierte Fluidmenge pro Zeiteinheit, gemessen an der Fallenapertur. Abhängig von der Anströmgeschwindigkeit als auch von der Fallengeometrie.
- **Massenakkumulation $M_{TP}$:** gesamte Partikelmasse, die in der Falle während des wählbaren **Zeitintervalles t** unter den vorgegebenen Strömungs-, Partikel- und Umgebungsverhältnissen zurückbleibt. Die **Teilmassenakkumulation $(M_T)_n$** identifiziert die Masse der **Partikelgruppe n,** die die mittlere **Sink- oder Steiggeschwindigkeit $w_{sn}$** (entweder als Individuum oder als Mittelwert einer Partikelgruppe mit dem **Laufindex n**) aufweist. Die Menge aller Sink-/Steiggeschwindigkeiten $w_{sn}$ bildet das Sink-/Steiggeschwindigkeitsspektrum der Partikelgruppen mit einer Angabe, wie sich die gesamte Massenakkumulation $M_{TP}$ auf die n Partikelgruppen ("Partikelspektrum") verteilt.
- **Partikel-Konzentration $c_{0n}$ :** anfängliche, d.h. zum Sammelzeitpunkt vorliegende Masse (bestimmt durch Zahl, Volumen und Dichte der Partikel) pro Fluid-Einheitsvolumen für eine Partikelgruppe n.
- **TKE:** Turbulente kinetische Energie, hier speziell bei konischen Fallen auf die Region unmittelbar oberhalb des Sammelbehälters bezogen.
- **Yield Funktion $y \, (u_a, w_{sn})$:** experimentell zu bestimmende Funktion darüber, welcher Anteil einer Partikelgruppe n, die sich mit der Zirkulationszelle (beschreibt den dynamischen Transportprozess in der Zirkulationszone) durch die Falle bewegt, von dieser zurückgehalten wird.
- $\tau$ : **Bodenschubspannung** in der Falle
- $\tau_d$ **: Depositionsstress** in der Falle.

Ein relevanter, aus der Massenakkumulation abzuleitender aktueller Parameter des systematisch zu erfassenden Stoffes mit Partikelcharakter in einem strömenden Fluid ist der partielle in-situ-Massenfluss $(c_o w_s)_n$ derjenigen n Partikelgruppen, die in einer Falle zurückgehalten werden und die sich zu einem in-situ-Gesamtmassenfluss $\Sigma(c_o w_s)_n$ aufaddieren. Seine Bestimmung ist gemäß Gleichung [1] mit einer einzelnen Falle aber nur dann möglich, wenn ausschließlich Partikel einer einzigen Partikelgruppe mit einer einzigen Sink-/Steiggeschwindigkeit $w_{s1}$ gefangen werden. In der Natur treten im allgemeinen mehr als eine Partikelgruppe gleichzeitig auf, die durch das Sink-/Steiggeschwindigkeitsspektrum beschrieben werden. Bei dessen Vorhandensein ist eine Bestimmung des in-situ-Massenflusses von n unterschiedlichen Partikelgruppen und des in-situ-Gesamtmassenflusses des Partikelspektrums unter Strömung und Einsatz eines einzelnen Fallentyps nicht möglich. Auf Einzelfallen-Anordnungen basieren jedoch die bekannten Vorrichtungen zum Sammeln von Sinkstoffen.

Bezüglich der bekannten Vorrichtungen zur Durchführung der bekannten Sammel- und Extraktionsverfahren werden bei bekannten Schutzrechten Sinkstofffallen beschrieben, die nicht geeignet sind, eine Bestimmung des vertikalen in-situ-Massenflusses unter Strömung des Fluids zu ermöglichen. So wird in den Schutzrechten **DE 295 14 173 U1** und **US 4,869,118** eine Apparatur beschrieben, die nur für ruhendes Wasser vorgesehen ist. In weiteren Vorrichtungen bestehen keine internen Ruhezonen zum gravitationsbedingten Absinken der Partikel unterhalb der falleninternen Zirkulationszone, sondern es werden gerührte bzw. gepumpte Proben untersucht (**DE 34 30 263 A1**). Andere vorgeschlagene Vorrichtungen können nicht in ozeanischen Tiefen in-situ eingesetzt werden (**DE 92 11 263 U1**) oder haben unzureichende Geometrien, um die Resuspension von bereits in der Vorrichtung abgesunkener Partikel bei höheren Anströmgeschwindigkeiten zu vermeiden (**DE 295 20 919 U1**). Zusätzlich gibt es Vorrichtungen für die Kontrolle eines ausschließlich gravitationsbezogenen Sedimentationssystems mit Rührwerk (**WO 96/33000 A1**). Die Druckschrift **DE 197 37 448 A1** stellt eine Tellerfalle vor, für die die Sedimentationsgleichung bekannt ist und womit in Bodennähe eine relativ unverfälschte Fangrate des aussedimentierenden Materials erzielt werden kann, wenn während der Sammelzeit keine Erosionsereignisse auftreten. Diese Falle arbeitet nach einem anderen Sammelprinzip als Fallen mit Hohlgeometrien. Weiterhin werden in bekannten Patenten nur Einzelgeräte (**US 4,762,009; US 3,715,913**) zum Sammeln verwendet, ggfs. auch als Mehrfachanordnung zur Replikation der Ergebnisse (**DE 295 20 919 U1**). Konzepte mit gezielt unterschiedlichen Fallentypen kommen nicht zum Einsatz.

Der bekannte Stand der Technik zur Erfassung von Partikeln in der Fluidsäule lässt sich dahingehend zusammenfassen, dass sich in Partikelfallen sowohl mit Hohl- als auch mit Flachgeometrien die Massenakkumulationen nach Gesetzmäßigkeiten aufbauen, die durch Kombinationen von Fallenart und -typ, Strömungs- sowie Partikeleigenschaften am Sammelort individuell bestimmt sind. Die auftretenden Variationen der verschiedenen bestimmenden Variablen und resultierenden Massenakkumulationen erstrecken sich unter realen Bedingungen über große Bereiche. Bei Einsatz einzelner Fallen unter Strömung kann - selbst bei so geringen Geschwindigkeiten wie 1 cm/s - aus der Massenakkumulation bislang nicht der in-situ-Massenfluss unterschiedlicher n Partikelgruppen im zu erfassenden Stoff bestimmt werden. Selbst der Einsatz mehrerer Fallen der gleichen Art und sogar Typs zur statistischen Absicherung des Sammelergebnisses führt zu keiner Aussage über diesen Parameter.

Es ist daher die **Aufgabe** der vorliegenden Erfindung, ein geeignetes Verfahren zur systematischen Erfassung von Stoffen mit Partikelcharakter in strömenden Fluiden anzugeben, mit dessen Hilfe der vertikale Partikelfluss und sich daraus ableitende weitere Partikelparameter als relevante in-situ-Parameter derjenigen Partikelgruppen des zu erfassenden Stoffes in einer freien Fluidsäule bestimmbar sind, die zur Massenakkumulation in einer Partikelfalle beitragen. Desweiteren soll eine auf einem kalibrierten Partikelfallentyp und einem Strömungsmesser basierende Vorrichtung angegeben werden, die in besonderer Weise zur Verfahrensdurchführung geeignet ist, dabei aber einfach in ihrem Aufbau und in ihrer Bedienung gestaltet ist. Dabei sollen die Einsatzorte nicht auf ozeanische Umgebungen beschränkt sein, sondern sich auf alle limnischen, fluvialen und auch technischen Bereiche erstrecken können.

Die Aufgabe wird durch ein Verfahren mit den Merkmalen im Anspruch 1 und durch eine Vorrichtung mit den Merkmalen im Anspruch 5 gelöst.

Erst aus dem vertieften Verständnis fallenspezifischer Akkumulationsgleichungen von Partikelmasse (oder gegebenenfalls auch anderen partikelspezifischen Charakteristiken) heraus lässt sich das erfindungsgemäße Verfahren zur Bestimmung des vertikalen in-situ-Massenflusses einzelner Partikelgruppen aus der gesamten Massenakkumulation unter Strömungseinfluss an kalibrierten Partikelfallen entwickeln. Das erfindungsgemäße Verfahren stellt damit eine konsequente Weiterentwicklung der Erkenntnisse dar, die in den letzten Jahren bezüglich der relevanten in-situ-Parameter bei Stoffen mit Partikelcharakter unter Strömungseinfluss gewonnen wurden. War bislang eine Unterscheidung dieser relevanten Parameter nicht möglich und deshalb die in-situ-Erfassung nur auf Stoffe mit einer einzigen Partikelgruppe begrenzt, können nunmehr alle partikelartigen Stoffe mit einer beliebigen Anzahl n unterschiedlicher Partikelgruppen sinnvoll und kategorisch in ihren in-situ-Parametern erfasst werden. Verfahrenswesentlich ist, dass eine mit der Anzahl n unterschiedlicher Partikelgruppen übereinstimmende Anzahl N von Messorten im Messbereich aufgesucht wird, an denen jeweils das gesamte Partikelspektrum zur Massenakkumulationen - in durchaus unterschiedlichen Mengen bei unterschiedlichen Fallentypen - beiträgt. Zusammen mit dem zu messenden Sink-/Steiggeschwindigkeitsspektrum der n unterschiedlichen Partikelgruppen steht damit über die o.a. Akkumulationsgleichungen ein Gleichungssystem mit einer Anzahl aus N Gleichungen zur Verfügung, das nach den jeweiligen Werten der Konzentration der n Partikelgruppen als unbekanntem Parameter unter Kenntnis der Kalibrierungs- und Mess-Parameter aufgelöst werden kann. Daraus ergibt sich dann unter Verknüpfung mit den zugehörigen unterschiedlichen Partikelsink-/Steiggeschwindigkeiten rechnerisch der jeweilige Wert des vertikalen in-situ-Massenflusses der n unterschiedlichen Partikelgruppen sowie als aktueller charakteristischer Summenparameter der am Messort erfassbare (sehr langsame Partikel sind mit anderen Verfahren zu ermitteln) in-situ-Gesamtmassenfluss des Partikelspektrums im zu untersuchenden Stoff.

Wesentliche Bedingung für die Lösungsfähigkeit eines Gleichungssystems aus N Gleichungen ist deren lineare Unabhängigkeit untereinander. Eine Gleichung darf nicht durch bloße Anwendung von Faktoren in eine andere Gleichung überführbar sein. Dies wird bei dem erfindungsgemäßen Verfahren dadurch gewährleistet, dass die N Messorte bzw. die dort vorgesehenen Partikelfallen als einzelne Fallentypen ausgebildet sind, die sich in den Werten ihrer Fallenparameter, insbesondere in ihren geometrischen Abmessungen, deutlich unterscheiden. In ihrer geometrischen Auslegung zeigen unterschiedliche Partikelfallen - auch bei geometrischen Ähnlichkeiten - ein individuelles Fangverhalten, das auch von den herrschenden Strömungs- und Partikelparametern abhängig ist. Ähnlichkeitsmechanische Überführungen zwischen einzelnen Fallentypen sind bisher nicht bekannt. Solche Fallen wären für einen Einsatz an den Messorten ungeeignet. Bei der Parameterwertebelegung ist ein solcher Unterscheidungsabstand einzuhalten, dass auftretende Messunsicherheiten bei den einzelnen Parameterwerten keinen Einfluss in Richtung einer linearen Abhängigkeit haben. Nur eine Wertebelegung der einzelnen Parameter oberhalb dieses Messunsicherheitsbereiches, der in den entsprechenden Konditionierungsbedingungen für das Verfahren und seine Durchführungsapparatur festzulegen ist, gewährleistet die geforderte lineare Unabhängigkeit der einzelnen Gleichungen im Gleichungssystem.

Alle in den N Gleichungen des linear unabhängigen Gleichungssystems auftretenden Parameter sind indiziert entsprechend der auftretenden Anzahl n unterschiedlicher Partikelgruppen im zu erfassenden Stoff. Für jede der N Gleichungen ergibt sich damit ein entsprechender Wertesatz der einfließenden Parameter. Eine indizierte Größe ist dabei das Sammelzeitintervall, innerhalb dessen die verschiedenen Massenakkumulationen in den Fallen auftreten. Für das Sammelzeitintervall kann jeder beliebige sinnvolle Wert angesetzt werden. Für den allgemeinen Fall ergibt sich hieraus, dass die N Einzelfallen zu unterschiedlichen Zeitpunkten und für unterschiedliche Dauer im regionalen Messgebiet zum Sammeln eingesetzt werden können unter der Voraussetzung, dass die anderen Parameter in ihrer zeitlichen Wertezuordnung ebenfalls bekannt sind und stets alle n unterschiedlichen Partikelgruppen eingefangen werden. Nach einer vorteilhaften Weiterbildung des erfindungsgemäßen Verfahrens kann aber auch vorgesehen sein, dass der Zeitpunkt für den Beginn der vorgegebenen Sammelzeitintervalle für jede der N Partikelfallen identisch ist und alle Sammelzeitintervalle gleich lang sind. In diesem synchronen Fall ist sicher gewährleistet, dass die Umgebungsparameter übereinstimmen. Außerdem ergibt sich eine Vereinfachung in der Werterechnung, wenn alle Sammelzeiten identisch sind.

Jede der n Partikelgruppen weist eine charakteristische vertikale Geschwindigkeitskomponente (Partikelsink- oder -steiggeschwindigkeit) in der Fluidsäule auch unter Strömungseinfluss auf, die das Sink-/Steiggeschwindigkeitsspektrum bilden. Die Ermittlung des Sink-/Steiggeschwindigkeitsspektrums der n Partikelgruppen kann auf unterschiedliche Arten erfolgen. Neben speziellen Verfahren, beispielsweise einem eigenständigen "Sinkgeschwindigkeitsapparat" (Settling Chamber Method - SCM, vgl. **Aufsatz IV** von H.-P. Kozerski 1994 "Possibilities and limitations of sediment traps to measure sedimentation and resuspension", Hydrobiologica 284, pp.93-100), können zur Ermittlung des Sink-/Steiggeschwindigkeitsspektrums insbesondere auch mathematische Optimierungsverfahren sowie Verfahren mit einem Zugriff auf bekannte Datensätze, beispielsweise aus Literaturangaben und Datenbanken, eingesetzt werden. Besonders einfach und damit vorteilhaft ist es jedoch, wenn nach einer nächsten Erfindungsausgestaltung das Sink-/Steiggeschwindigkeitsspektrum der n Partikelgruppen optisch, insbesondere an einem Messort ohne auftretende Strömung, ermittelt wird. Optische Verfahren sind einfach und ermöglichen eine hohe Messgenauigkeit bei reproduzierbaren Messergebnissen. Das Sink-/Steiggeschwindigkeitsspektrum kann optisch an vielen Stellen im regionalen Messgebiet zur Validierung der einzelnen Messwerte ermittelt werden. Existieren Ruhezonen im Messgebiet ohne Fluiddurchströmung, in denen aber trotzdem eine Registrierung aller erfassbaren n Partikelgruppen gewährleistet ist, kann in einer solchen Ruhezone optisch besonders günstig gemessen werden. Ausreichend ist hierbei das Vorsehen nur eines einzigen optischen Messortes, da eine statistische Mittelwertbildung nicht erforderlich ist.

Bereits in der Beschreibungseinleitung wurde darauf eingegangen, dass im Hinblick auf den Begriff "Partikelcharakter" der Stoffe sowohl Sink- als auch Steigstoffe gemeint sind, weshalb alternativ auch Sink- bzw. Steiggeschwindigkeiten eingeführt sind. Nach einer anderen Erfindungsfortführung ist es daher möglich, dass die n unterschiedlichen Partikelteilgruppen im systematisch zu erfassenden Stoff mit Partikelcharakter von Feststoffen mit Abtriebsverhalten oder von Fest-Gasstoff-Kombinationen unterschiedlichen Anteils mit Auftriebsverhalten im strömenden Fluid gebildet werden. Die beschreibenden Parameter sind bei Sink- als auch bei Steigstoffen identisch, ein Unterschied ist nur im Vorzeichen der Sink- bzw. Steiggeschwindigkeit gegeben. Eine andere Verfahrenskonstellation ergibt sich daher aus der Anwendung für feste oder gasförmige Partikel nicht, es muss lediglich gewährleistet sein, dass die sich in entgegengesetzte Vertikalrichtungen bewegenden Partikelsorten auch sicher entsprechend den Akkumulationsgleichungen eingefangen werden. Deshalb können in der Regel nur aufsteigende oder nur absinkende Partikel erfasst werden.

Wesentliches Element zur Verfahrensdurchführung ist die Partikelfalle (oder Gasfalle). Diese kann unterschiedlichen Arten (Zylinder-, Trichter- oder Grenzschicht- bzw. Tellerfalle) angehören und bezüglich ihrer geometrischen Abmessungen unterschiedlich ausgebildet sein. Jede Ausführung einer Partikelfalle stellt damit einen einzelnen Fallentyp dar. Eine sich aus dem erfindungsgemäßen Verfahren direkt ergebende Anordnung zur Verfahrensdurchführung besteht in einer Mindestanzahl N unabhängiger Partikelfallen, die zumindest an N Messorten im regionalen Messgebiet des strömenden Fluids angeordnet sind und jeweils alle die n unterschiedlichen, erfassbaren Partikelgruppen einfangen. Hierbei kann es sich um autarke Partikelfallen gleicher oder auch unterschiedlicher Fallenarten mit geometrischen Variationen in den verschiedenen, den jeweiligen Messerfordernissen angepassten Ausführungen handeln, die beispielsweise auch anderen Messzwecken dienen und aus diesen Gründen im Messgebiet positioniert sind. Sind mehr Fallen vorhanden als unterschiedliche n Partikelgruppen erfassbar sind, führt dies nur zu einem überbestimmten Gleichungssystem. Es können dann einzelne Fallen passend ausgesucht oder die Werte der überzähligen Fallen beispielsweise zur Fehlerabschätzung herangezogen werden. Im Falle einer Unterbestimmung ist die Fallenanzahl entsprechend zu ergänzen. Bei Kenntnis der Fallen- und Strömungsparameter kann durch das erfindungsgemäße Verfahren eine in-situ-Verknüpfung dieser N autarken Partikelfallen zu den n unterschiedlichen Partikelgruppen im zu erfassenden Stoff hergestellt werden. Dazu sind noch die Massenakkumulationen in den N Partikelfallen und das Sinkgeschwindigkeitsspektrum (entsprechend Steiggeschwindigkeitsspektrum bei Steigstoffen) der n Partikelgruppen zu ermitteln. Jede Falle muss bei dieser Anordnung jedoch vollständig instrumentiert sein und getrennt bedient werden.

Neben dieser allgemeinen Vorrichtungsform zur Verfahrensdurchführung ist es jedoch, ausgehend von zumindest einer einem Sammelbehälter zugeordneten, kalibrierten Partikelfalle einer Fallenart und einem Strömungssensor, besonders vorteilhaft, wenn erfindungsgemäß eine Vorrichtung vorgesehen ist, bei der zur Bestimmung des vertikalen in-situ-Massenflusses von n unterschiedlichen Partikelgruppen und des daraus ableitbaren in-situ-Gesamtmassenflusses des Partikelspektrums im zu erfassenden Stoff in einer freien Fluidsäule als regionalem Messbereich ein Fallenmultiplett mit einer zu den n unterschiedlichen Partikelgruppen kongruenten Anzahl N Partikelfallen mit typenspezifischen Fallenparametern und zugeordneten Sammelbehältern mit gegen die Sink-/Steig-Bewegungsrichtung der n Partikelgruppen orientierter Fangrichtung vorgesehen ist. Mit der Bezeichnung "Multiplett" soll die Gruppenzusammenhörigkeit benachbarter Fallen zum Ausdruck gebracht werden, die alle dem Messen der gleichen physikalischen Größen dienen. Ein solches Fallenmultiplett stellt eine komplette Messeinheit dar und ist entsprechend einfach einzusetzen und zeitsparend zu bedienen. Durch die enge Nachbarschaft der einzelnen Fallen ist eine korrekte Positionierung im regionalen Messgebiet sicher gewährleistet, sodass alle Fallen auf jeden Fall gleichermaßen aus dem auftretenden Partikelspektrum Fangmasse sammeln. Weiterhin kann eine getrennte Instrumentierung entfallen. Mit übergeordneten Einzelinstrumenten können die entsprechenden Parameter für das ganze Multiplett ermittelt werden. Die Anordnung entgegen der Sink- bzw. Auftriebs-Bewegungsrichtung der Partikel, gewährleistet, dass beide Arten (Sinkstoffe, Steigstoffe) eingefangen werden können. Die jeweilig einzufangende Partikelsorte bewegt sich in den jeweiligen Fangraum hinein und verbleibt dort.

Je nach Art der auftretenden n Partikelgruppen und des strömenden Fluids sind unterschiedliche, jeweils den Partikel- und Gasfallen zuzuordnende Fallenarten besonders zum Sammeln geeignet. Deshalb ist es nach einer Ausgestaltung der Vorrichtung zur Durchführung des erfindungsgemäßen Verfahrens sinnvoll, wenn die N Partikelfallen mit typenspezifischen Fallenparametern unterschiedlichen Fallenarten zugeordnet sind. Die Variation in den einzelnen Fallentypen innerhalb einer Fallenart ist erforderlich, um die lineare Unabhängigkeit der Koeffizienten des Gleichungssystem zu gewährleisten. Weiter oben wurde aufgezeigt, dass zu den einzelnen Fallenarten unterschiedliche Akkumulationsgleichungen gehören, die entsprechend in ein Gleichungssystem integriert werden und in gleicher Weise zur Auflösung nach den gesuchten Partikelparametern führen können. Weitere Fallen- und Strömungsparameter, beispielsweise die Bodenschubspannung und der Depositionsstress bei Tellerfallen, sind dann entsprechend durch Kalibrierung der Fallen in Labor oder Feld und durch Messung der Strömung während des Feldeinsatzes zu ermitteln. Auf der Basis der jeweiligen Fallen-, Strömungs- und Partikelparameter sammeln sich für jeden Fallentyp unterschiedliche Massenakkumulationen entsprechend der zugehörigen Akkumulationsgleichung an, bei Fallen mit Hohlgeometrie (Zylinder- und Trichterfallen) beispielsweise nach den Gleichungen [1] bzw. [2]. Aufgrund der bereits besonders fortgeschrittenen Erkenntnisse des Verhaltens dieser Fallenarten, die sich in den experimentell sicher bestätigten semiempirischen Akkumulationsgleichungen niederschlagen, ist es deshalb gemäß einer nächsten Erfindungsfortführung vorteilhaft, wenn zumindest eine der N Partikelfallen als Falle mit Hohlgeometrie, insbesondere als Zylinderfalle, mit einer Ruhezone oberhalb des Sammelbehälters ausgebildet ist. Besonders die Ruhezone, die im Hohlzylinder auf die Zirkulationszone, die bei stärkerer Anströmgeschwindigkeit in der Tiefe auch in mehrere Wirbel aufbrechen kann und die der Übergangszone folgt, ist ein ausgezeichneter Raum in der Zylinderfalle, weil hier das Fluid ohne Strömungseinfluss auftritt.

Das Sink-/Steig-Geschwindigkeitsspektrum kann an unterschiedlichen Stellen im Fluid mit verschiedenen Techniken und Mitteln aufgenommen werden. Außerhalb einer Falle ist jedoch darauf zu achten, dass aufgrund ihrer geringen Geschwindigkeiten nicht einzufangende Partikelgruppen kompensiert werden. Ein Ort, an denen nur diejenigen Partikelgruppen auftreten, die auch von der Falle eingefangen werden, ist die Ruhezone in Zylinderfallen. Eine Tellerfalle kann insgesamt als Ruhezone angenommen werden. In einer Ruhezone unterliegen die eingefangenen Partikeln nur noch sehr geringen oder gar keinen Strömungseinflüssen mehr. Nach einer nächsten Erfindungsausbildung ist es deshalb besonders vorteilhaft, wenn an zumindest einer Partikelfalle, insbesondere in der Ruhezone einer Partikelfalle mit Hohlgeometrie, ein optischer Sensor zur Erfassung des Sink-/Steiggeschwindigkeitsspektrums der n Partikelgruppen angeordnet ist. Bei dem optischen Sensor kann es sich beispielsweise um eine optische Aufzeichnungseinheit (Videokamera) handeln. Mit einfachen Mitteln können auf diese Weise hochgenaue, reproduzierbare Messergebnisse für das Sink-/Steiggeschwindigkeitsspektrum erreicht werden. Eine messtechnische oder rechnerische Kompensation für nicht einzusammelnde Partikelgruppen ist nicht erforderlich.

Ein besonderes Problem bei der Verwendung von Partikelfallen ist die Entnahme der eingesammelten Massenakkumulationen aus den zugeordneten Sammelbehältern, was auch für ein Fallenmultiplett gilt. Um einerseits ständige Entleerungen, die jeweils ein Bergen der abgesenkten Partikelfalle erforderlich machen, und andererseits aber auch zu große Sammelbehälter mit sehr großen Standzeiten, in denen Veränderungen der Partikelgruppen auftreten können, zu vermeiden, ist es gemäß einer weiteren Erfindungsfortführung praktisch, wenn das Fallenmultiplett mit einem verschieblichen, insbesondere drehbaren Probenmagazin mit einer Vielzahl von Sammelbehältern ausgerüstet ist, die den einzelnen Partikelfallen variabel zugeordnet werden. Derartige Probenmagazine sind im Zusammenhang mit verschiedenen Sammeleinrichtungen bekannt und können in den unterschiedlichsten Formen ausgeführt sein. Wichtig ist die eindeutige Zuordnung der verschiedenen Sammelbehälter zu den entsprechenden Messwertsätzen. Bei dem Fallenmultiplett können lineare Magazine mit ein- oder mehrreihigem Aufbau mit entsprechenden parallelen Bahnenverschiebungen der Sammelbehälter eingesetzt werden. Es können aber auch bei fest positionierten einzelnen Partikelfallentypen runde Magazine verwendet werden, bei denen die Sammelbehälter in einem Führungskreis verschiebbar angeordnet sind. Von Vorteil ist hierbei die besonders stabile und kompakte Anordnung der Sammelbehälter, die eine entsprechend günstige Anordnung der Partikelfallen zulässt. Im Sinne eindeutiger Wertezuordnungen ist es daneben sinnvoll, wenn nach einer nächsten Fortführung der Erfindung die Sammelbehälter über eine individuelle Zeitsteuerung, insbesondere nach Maßgabe eintretender Ereignisse, geöffnet und geschlossen werden. Dabei können die Ereignisse sowohl ein bestimmter erreichter Füllungsgrad im Sammelbehälter als auch bestimmte Umweltereignisse sein, wie beispielsweise Partikelwolken.

Im Zusammenhang mit einem Probenmagazin und einer Zeitsteuerung der Sammelbehälterzuordnung am Fallenmultiplett kann das erfindungsgemäße Verfahren zur Stofferfassung in besonderer Weise einfach automatisiert werden. Im Zusammenhang mit beispielsweise bestimmten Umweltverschmutzungen oder anderen Belastungen im Fluid oder mit bestimmten Strömungsverhältnissen im Fluid kann es daneben auch günstig sein, wenn das Fallenmultiplett in unterschiedlichen Höhen im strömenden Fluid positionierbar ist. Dies kann beispielsweise durch ein entsprechendes Verankerungssystem, mit dem das Fallenmultiplett auch einfach absenk- und einholbar ist, erfolgen. Weitere Erläuterungen zu Art und Ablauf der Verfahrensdurchführung sind dem speziellen Beschreibungsteil zu entnehmen.

Zuvor sei an dieser Stelle noch erwähnt, dass den vorliegenden Ausführungen die partikelrelevanten Konzentrations- und Sink-/Steiggeschwindigkeitsparameter zugrundegelegt sind. Die Konzentration ist ein charakteristischer Parameter, der immer im Zusammenhang mit den Aussagen über einzelne Partikelgruppen des Partikel-Gesamtspektrums stehen wird. Anstelle der Sink- oder Steiggeschwindigkeiten können die Partikelgruppen aber auch durch das Verhalten von sogenannten "Tracereigenschaften", an die die einzelnen Partikel der jeweiligen Partikelgruppen gebunden sein können, charakterisiert sein. Die Darstellung zugehöriger Tracerflüsse wäre dann durch entsprechende Tracer-Akkumulationsgleichungen darzustellen.

**Der Charakter der Erfindung** bezüglich Verfahren und Vorrichtung zur Verfahrensdurchführung wird nachfolgend anhand der schematischen Figuren näher erläutert. Dabei zeigt:

Figur 1    zum erfindungsgemäßen Verfahren eine vereinfachte Darstellung der Verhältnisse an einer parametrisierten Zylinderfalle und

Figur 2    ein Fallenmultiplett als bevorzugte Vorrichtung zur Verfahrensdurchführung.

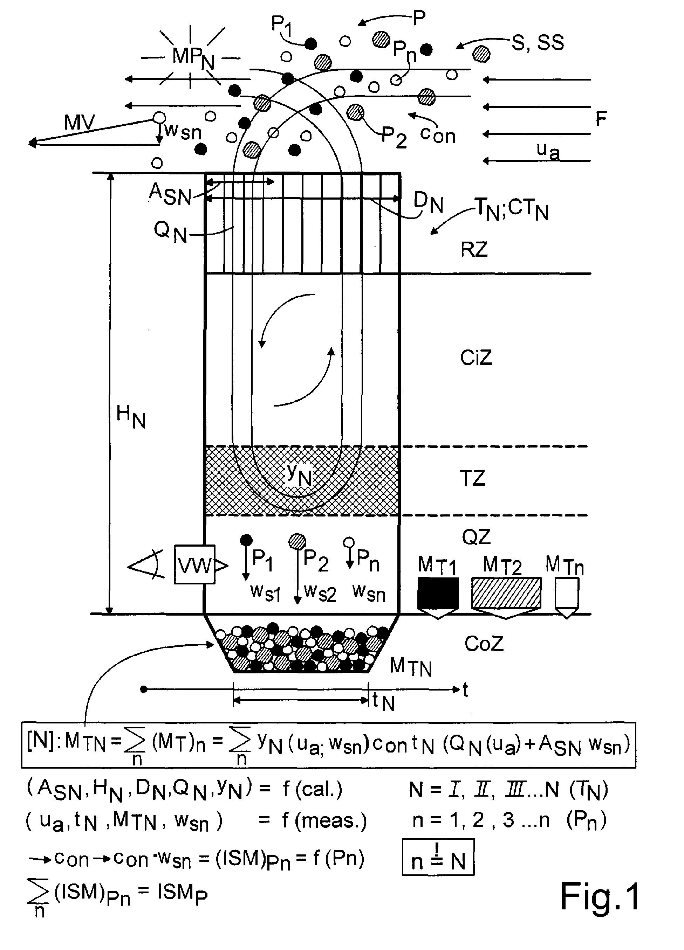

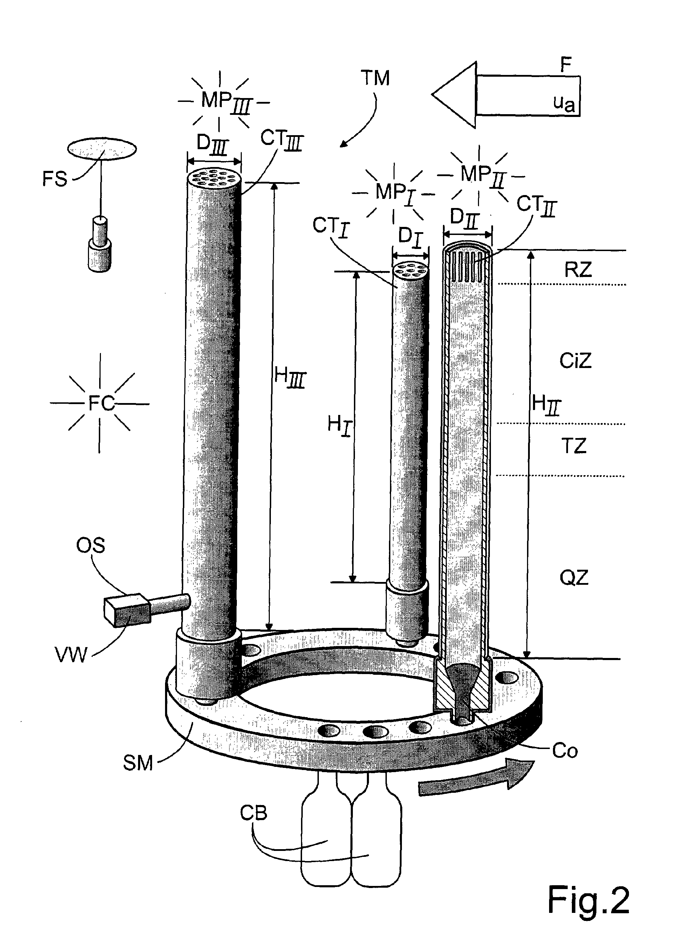

**Die Figur 1** zeigt eine kalibrierte Zylinderfalle $CT_N$ als Vertreter einer allgemeinen Falle **T** (Art und Typ) mit einem Verhältnis von Höhe **H** zu Durchmesser **D** von ungefähr 8 zu 1 in einem mit einer Anströmgeschwindigkeit $u_a$ strömenden Fluid **F** als regionalem Messbereich **MA**. Der Laufindex **N** zeigt die Stellung der Falle im Multiplett (vergleiche Figur 2) und damit den Messort $MP_N$ an. Ein vom Fluid getragener Stoff **S** mit Partikelcharakter weist Partikelgruppen $P_1$, $P_2$....$P_n$ mit jeweiligen Konzentrationen $c_{0n}$ auf, wobei **n** der Laufindex über alle auftretenden Partikelgruppen $P_n$ im erfassbaren Partikelspektrum **P** ist. Im gewählten Ausführungsbeispiel handelt es sich um einen Sinkstoff **SS** mit absinkenden Partikelgruppen $P_1...P_n$. Diese weisen einen Bewegungsv ie Zirkulationszelle, die als dynamischer Transportprozess in der Zirkulationszone **CiZ** die Anbindung des Falleninneren an die Außenströmung im Fluid **F** beschreibt, wieder aus der Falle herausgeführt. Über die empirisch ermittelte Yield-Funktion $y_N$ der Zylinderfalle $CT_N$ ist festgelegt, welcher Anteil der Partikelgruppen $P_n$ nach der Übergangszone **TZ** die Ruhezone **QZ** erreichen.

Nur die in die Ruhezone **QZ** gelangte Partikelteilgruppen $P_1..P_n$, deren Sinkgeschwindigkeitsspektrum **VW** hier einfach und genau ermittelt werden kann, werden in einer Sammelzone **CoZ** am Boden der Zylinderfalle $CT_N$ gesammelt und bilden die zu der Falle $CT_N$ gehörige Massenakkumulation $M_{TN}$ pro Zeiteinheit (auch "Fangmasse"), deren Ursprung in den Konzentrationen $c_{0n}$ der Partikelgruppen $P_n$ im Fluid **F** liegt.

Nachfolgend ist ein Gleichungssystem **[N = I, II, III]** beispielhaft für ein Multiplett **TM** für eine Partikelgruppenanzahl **n = 3** sinkende, am Akkumulationsvorgang beteiligte Partikelgruppen $P_n$ angegeben. Durch Bildung eines Gleichungssystems mit **N = 3** Gleichungen ($M_{TI}$, $M_{TII}$, $M_{TIII}$), die durch konditionierungsgerechte Geometrieparametrierung von **N = 3** Fallentypen $CT_N$ linear unabhängig sind, können unter Verwendung der erhaltenen Mess-, Sammel- und Rechendaten die in-situ-Konzentrationen $c_{01}$, $c_{02}$, $c_{03}$ der drei Partikelgruppen $P_1$, $P_2$, $P_3$ und daraus unter Einbeziehung der zugehörigen Sinkgeschwindigkeiten $w_{s1}$, $w_{s2}$, $w_{s3}$ der jeweilig gesuchte vertikale in-situ-Massenfluss $(ISM)_{P1}$, $(ISM)_{P2}$, $(ISM)_{P3}$ der einzelnen Partikelgruppen $P_1$, $P_2$, $P_3$ und der zugehörige in-situ-Gesamtmassenfluss $(ISM)_P$ für das Partikelspektrum **P** als relevante Partikelparameter ermittelt werden.

Verändern sich während der Sammelzeitintervalle $t_N$ durch die Umgebungsbedingungen die Anströmgeschwindigkeit $u_a$ und die davon abhängigen Fallenvariablen $Q_N$ und $y_N$, so sind approximierende oder numerische Lösungsmethoden aus einer entsprechenden Vielzahl von Gleichungen anzuwenden. Die Gleichung **[IV]** beschreibt das Akkumulationsverhalten einer Tellerfalle. Als zusätzliche Partikelparameter treten hier Schubspannungen $\tau$ auf. Diese Gleichung **[IV]** kann an die Stelle einer der drei Gleichungen **[I, II, III]** treten, wenn die Relation zwischen den Depositionsgeschwindigkeiten $u_{dn}$ der Partikelgruppen $P_n$ und den messbaren Schubspannungen zur Ablagerung derselben Partikelgruppen $P_n$ führen. Die Gleichung **[IV]** kann auch als weitere Gleichung bei Auftreten von **n = 4** verschiedenen Partikelgruppen $P_n$ eingesetzt werden. Allgemein können entsprechend der Anzahl **n** der auftretenden Partikelgruppen $P_n$ gemischte Gleichungssysteme aus den entsprechenden Akkumulationsgleichungen für variierte, kalibrierte Fallentypen als wählbare Kombination unterschiedlicher Fallenarten aufgestellt werden.

$$[I] \qquad M_{TI} = c_{o1} \, (y_{I1} \, t_I \, (Q_I + A_I \, w_{s1})) + c_{o2} \, (y_{I2} \, t_I \, (Q_I + A_I w_{s2})) + c_{o3} \, (y_{I3} \, t_I \, (Q_I + A_I w_{s3}))$$

$$[II] \qquad M_{T\,II} = C_{o1} \, (y_{II1} \, t_{II} \, (Q_{II} + A_{II} w_{s1})) + c_{o2} \, (y_{II2} \, t_{II} \, (Q_{II} + A_{II} w_{s2})) + c_{o3} \, (y_{II3} \, t_{II} \, (Q_{II} + A_{II} w_{s3}))$$

$$[III] \qquad M_{T\,III} = c_{o1} \, (y_{III1} \, t_{III} \, (Q_{III} + A_{III} w_{s1})) + c_{o2} \, (y_{III2} \, t_{III} \, (Q_{III} + A_{III} w_{s2})) + c_{o3} \, (y_{III3} \, t_{III} \, (Q_{III} + A_{III} w_{s3}))$$

$$[IV] \qquad M_{T\,IV} = c_{o1} \, (w_{s1} - w_{s1}(\tau_{IV} / \tau_{d1})) + c_{o2} \, (w_{s2} - w_{s2} \, (\tau_{IV}/\tau_{d2})) + c_{o3} \, (w_{s3} - w_{s3} \, (\tau_{IV}/\tau_{d3}))$$

In der **Figur 2** ist eine Vorrichtung zur Ausführung dieses allgemein gültigen Verfahrensprotokolls perspektivisch dargestellt. Sie besteht aus einem Fallenmultiplett **TM** mit drei unabhängigen, synchron eingesetzten Zylinderfallen $CT_I$, $CT_{II}$, $CT_{III}$ mit Längen-Durchmesser-Verhältnis ("aspect-ratio") **H/D** von 8 : 1 (Minimum) und einem jeweiligem Innendurchmesser von $D_I$ = 45 mm, $D_{II}$ = 70 mm und $D_{III}$ = 100 mm. Die Fallenparameter $Q_N(u_a)$ und $y_N(u_a,w_s)$ sind in ihren Abhängigkeiten von der Anströmgeschwindigkeit $u_a$ und den Partikelsinkgeschwindigkeiten $w_{sn}$ durch Kalibrierung bestimmt. Die jeweilige aktive Fallenapertur $A_s$ ist pro Fallentyp $CT_I$, $CT_{II}$, $CT_{III}$ unterschiedlich, jedoch nahezu strömungsunabhängig. Bei den gewählten Geometriewerten ist eine lineare Unabhängigkeit in den Akkumulationsgleichungen **[I, II, III]** gewährleistet.

Es tritt auch bei höheren Anströmgeschwindigkeiten $u_a$ in den Fallen $CT_I$, $CT_{II}$, $CT_{III}$ eine Ruhezone **QZ** unterhalb der Zirkulationszone **CiZ** auf. Im dargestellten Ausführungsbeispiel wird ausschließlich in der Ruhezone **QZ** der Zylinderfalle $CT_{III}$ das Sinkgeschwindigkeitsspektrum **VW** mit einem optischen Sensor **OS** (Videokamera) erfasst. Die Strömung **F** in der freien Fluidsäule **FC** wird über einen Strömungssensor **FS** gemessen. Die Lösung des Gleichungssystems **[N = I, II, III]** bei einem synchronen Zeitintervall $t_I = t_{II} = t_{III}$ zum Sammeln führt unter Kenntnis aller Fallen- und Umweltparameter sowie der Sinkgeschwindigkeiten $w_{sn}$ dann zu den Konzentrationen $c_{on}$ der drei gefangenen schnellst-sinkenden Partikelgruppen $P_1$, $P_2$, $P_3$. Im vorliegenden Validierungsfall sind diese Gruppen bestimmt durch mittlere Sinkgeschwindigkeiten von $w_{s1}$ = 5 m/Tag, $w_{s2}$ = 15 m/Tag und $w_{s3}$ = 30 m/Tag. Aus dem Produkt der errechneten Konzentrationen $c_{on}$ und der gemessenen Sinkgeschwindigkeiten $w_{sn}$ folgen die gruppenspezifischen in-situ-Massenflusswerte $(ISM)_{Pn} = (c_o w_s)_n$ und der fallenerfasste in-situ-Gesamtmassenfluss $(ISM)_P = \Sigma(c_o w_s)_n$.

Die drei Zylinderfallen $CT_I$, $CT_{II}$, $CT_{III}$ des Fallenmultipletts **TM** sind ortsfest auf einem drehbaren Probenmagazin **SM** angeordnet, das eine Reihe von Sammelbehältern **CB** aufweist. Diese sind über Trichter **Co** mit den einzelnen Zylinderfallen $CT_I$, $CT_{II}$, $CT_{III}$ verbindbar und werden durch eine in der Figur nicht weiter dargestellte Elektronik in vorgegebenen Zeitintervallen $\Delta t$ so weiterbewegt, dass über gewählte Zeitintervalle $t_N$ synchron gesammelt wird.

**Bezugzeichenliste**

| | | |
|---|---|---|
| $A_s$ | aktive Fallenapertur | |
| $c_{0n}$ | Konzentration der Partikelgruppe $P_n$ | |
| CB | Sammelbehälter | |
| CiZ | Zirkulationszone | |
| CoZ | Sammelzone | |
| $CT_N$ | kalibrierte Zylinderfalle N | |
| $D_N$ | Durchmesser der Falle N | |
| F | strömendes Fluid | |
| FC | freie Fluidsäule | |
| FS | Strömungssensor | |
| $H_N$ | Höhe der Falle N | |
| $(ISM)_{Pn}$ | in-situ-Massenfluss der Partikelgruppe $P_n$ | |
| $(ISM)_P$ | in-situ-Gesamtmassenfluss des Partikelspektrums | |
| $M_{TN}$ | Massenakkumulation (Fangmasse) in der Falle N | |
| MA | Messbereich | |
| $MP_N$ | Messort | |
| MV | Bewegungsvektor | |
| n | Partikelgruppenindex (1, 2, 3 ,..., n) | |
| N | Fallenindex (I, II, II,..., N) | |
| OS | optischer Sensor | |
| P | Partikelspektrum ($P_1 + P_2 + ... + P_n$) | |
| $P_1, P_2....P_n$ | Partikelgruppe /Gasbläschengruppe | |
| $PT_N$ | Tellerfalle | |
| $Q_N$ | Fluiddurchspülungsrate in der Falle N | |
| QZ | Ruhezone | |
| RZ | Gleichrichterzone | |
| S | Stoff | |
| SM | Probenmagazin | |
| SS | Sinkstoff | |
| $t_N$ | Sammelzeitintervall in der Falle N | |
| $\tau$ | Schubspannung | |
| $\Delta t$ | Zeitintervall | |
| T | Falle (allg. in Art und Typ) | |
| TM | Fallenmultiplett | |
| TZ | Übergangszone | |
| $u_a$ | Anströmgeschwindigkeit | |
| $u_{dn}$ | Depositionsgeschwindigkeit der Partikelgruppe $P_n$ | |
| VW | Sink- / Steiggeschwindigkeitsspektrum | |
| $w_{sn}$ | Sink- / Steiggeschwindigkeit der Partikelgruppe $P_n$ | |
| $y_N$ | Yield-Funktion der Falle N | |

**Patentansprüche**

1. Verfahren zur systematischen Erfassung von Stoffen mit Partikelcharakter, die sich in einem strömenden Fluid mit einer Vertikalkomponente bewegen, auf Basis der Akkumulationsgleichungen nach Gust et al. und Westrich für die Massenakkumulation von Partikelgruppen in einer kalibrierten Partikelfalle unter Strömungseinfluss und unter Kenntnis der aktuellen Werte der Fallen- und Strömungsparameter, wobei zur Bestimmung des vertikalen in-situ-Massenflusses ($(ISM)_{Pn}$) von n unterschiedlichen Partikelgruppen ($P_1$, $P_2$, ..., $P_n$) und des daraus ableitbaren in-situ-Gesamtmassenflusses ($ISM_P$) des erfassbaren Partikelspektrums (P) in einer freien Fluidsäule (FC) als regionalem Messbereich (MA) die in vorgegebenen Zeitintervallen ($t_N$) an N Messorten ($MP_N$) im Messbereich (MA), an denen alle n Partikelgruppen ($P_1$, $P_2$, ..., $P_n$) auftreten, in einer übereinstimmenden Anzahl N (N = n) sich in den Werten ihrer Fallenparameter oberhalb des Messunsicherheitsbereiches typisch unterscheidenden Partikelfallen ($T_N$) auftretenden fallenspezifischen Massenakkumulationen ($M_{TN}$) sowie das Sink-/Steiggeschwindigkeitsspektrum (VW) der n Partikelgruppen ($P_1$, $P_2$, ..., $P_n$) ermittelt werden und alle ermittelten Werte zur Auflösung eines Gleichungssystems aus N linear unabhängigen Akkumulationsgleichungen ([N]) nach den Werten der Konzentrationsparameter ($c_{on}$) der n Partikelgruppen ($P_1$, $P_2$, ..., $P_n$) eingesetzt werden.

2. Verfahren nach Anspruch 1,
**dadurch gekennzeichnet, dass**
der Zeitpunkt für den Beginn der vorgegebenen Sammelzeitintervalle ($t_N$) für jede der N Partikelfallen ($T_N$) identisch ist und alle Sammelzeitintervalle ($t_N$) gleich lang sind.

3. Verfahren nach Anspruch 1 oder 2,
**dadurch gekennzeichnet, dass**
das Sink- /Steiggeschwindigkeitsspektrum (VW) der n Partikelgruppen ($P_1$, $P_2$, ..., $P_n$) optisch, insbesondere an einem Messort ohne auftretende Strömung (QZ), ermittelt wird.

4. Verfahren nach einem der Ansprüche 1 bis 3,
**dadurch gekennzeichnet, dass**
die n unterschiedlichen Partikelteilgruppen ($P_1$, $P_2$, ..., $P_n$) im systematisch zu erfassenden Stoff (S) mit Partikelcharakter von Feststoffen (SS) mit Abtriebsverhalten oder von Fest-Gasstoff-Kombinationen unterschiedlichen Anteils mit Auftriebsverhalten im strömenden Fluid (F) gebildet werden.

5. Vorrichtung zur Durchführung des Verfahrens zur systematischen Erfassung von Stoffen mit Partikelcharakter nach einem der Ansprüche 1 bis 4 mit zumindest einer einem Sammelbehälter zugeordneten, kalibrierten Partikelfalle einer Fallenart und einem Strömungssensor, wobei zur Bestimmung des vertikalen in-situ-Massenflusses (($ISM)_{Pn}$) von n unterschiedlichen Partikelgruppen ($P_1$, $P_2$, ..., $P_n$) und des daraus ableitbaren in-situ-Gesamtmassenflusses ($ISM_P$) des Partikelspektrums (P) im zu erfassenden Stoff (S, SS) in einer freien Fluidsäule (FC) als regionalem Messbereich (MA) ein Fallenmultiplett (TM) mit einer zu den n unterschiedlichen Partikelgruppen ($P_1$, $P_2$, ..., $P_n$) kongruenten Anzahl N Partikelfallen ($T_N$, $CT_N$, $PT_N$) mit typenspezifischen Fallenparametern und zugeordneten Sammelbehältern (CB) mit gegen die Sink-/Steig-Bewegungsrichtung der n Partikelgruppen ($P_1$, $P_2$, ..., $P_n$) orientierter Fangrichtung vorgesehen ist.

6. Vorrichtung nach Anspruch 5,
**dadurch gekennzeichnet, dass**
die N Partikelfallen ($T_N$, $CT_N$, $PT_N$) mit typenspezifischen Fallenparametern unterschiedlichen Fallenarten zugeordnet sind.

7. Vorrichtung nach Anspruch 5 oder 6,
**dadurch gekennzeichnet, dass**
zumindest eine der N Partikelfallen ($T_N$) als Falle mit Hohlgeometrie, insbesondere als Zylinderfalle($CT_N$), mit einer Ruhezone (QZ) oberhalb des Sammelbehälters (CB) ausgebildet ist.

8. Vorrichtung nach einem der Ansprüche 5 bis 7,
**dadurch gekennzeichnet, dass**
an zumindest einer Partikelfalle ($T_N$), insbesondere in der Ruhezone (QZ) einer Partikelfalle mit Hohlgeometrie ($CT_N$), ein optischer Sensor (OS) zur Erfassung des Sink-/Steiggeschwindigkeitsspektrums (VW) der n Partikelgruppen ($P_1$, $P_2$, ..., $P_n$) angeordnet ist.

9. Vorrichtung nach einem der Ansprüche 5 bis 8,
**dadurch gekennzeichnet, dass**
das Fallenmultiplett (TM) mit einem verschieblichen, insbesondere drehbaren Probenmagazin (SM) mit einer Vielzahl von Sammelbehältern (CB) versehen ist, die den einzelnen Partikelfallen ($T_N$, $CT_N$, $PT_N$) variabel zugeordnet werden.

10. Vorrichtung nach einem der Ansprüche 5 bis 9,
**dadurch gekennzeichnet, dass**
die Sammelbehälter (CB) über eine individuelle Zeitsteuerung ($\Delta t$), insbesondere nach Maßgabe eintretender Ereignisse, geöffnet und geschlossen werden.

$MP_N$

$P_1$  $P$  $P_n$  S, SS

MV  $w_{sn}$

$c_{on}$

$P_2$

F

$u_a$

$A_{SN}$  $D_N$  $T_N; CT_N$

$Q_N$  RZ

CiZ

$H_N$

$y_N$  TZ

QZ

VW  $P_1$  $P_2$  $P_n$  $M_{T1}$  $M_{T2}$  $M_{Tn}$

$w_{s1}$  $w_{s2}$  $w_{sn}$

CoZ

$M_{TN}$

$t_N$  t

$$[N]: M_{TN} = \sum_n (M_T)_n = \sum_n y_N(u_a; w_{sn}) \, c_{on} \, t_N \, (Q_N(u_a) + A_{SN} \, w_{sn})$$

$(A_{SN}, H_N, D_N, Q_N, y_N) = f(\text{cal.})$     $N = I, II, III ... N \; (T_N)$

$(u_a, t_N, M_{TN}, w_{sn}) = f(\text{meas.})$     $n = 1, 2, 3 ... n \; (P_n)$

$\longrightarrow c_{on} \rightarrow c_{on} \cdot w_{sn} = (ISM)_{P_n} = f(P_n)$     $\boxed{n \overset{!}{=} N}$

$\sum_n (ISM)_{P_n} = ISM_P$

Fig.1

MP_III
D_III
CT_III

TM

F
u_a

FS

MP_I
MP_II
CT_I
D_I
D_II
CT_II

RZ

CiZ

H_III

H_II

H_I

TZ

FC

QZ

OS

VW

SM

Co

CB

Fig.2

EP 1 197 740 A1

| | Europäisches Patentamt | EUROPÄISCHER RECHERCHENBERICHT | Nummer der Anmeldung EP 01 71 0049 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A,D | G. GUST ET AL: "Particle accumulation in a cylindrical sediment trap under laminar and turbulent steady flow: An experimental approach" AQUATTIC SCIENCES, Bd. 58, Nr. 4, 1996, Seiten 297-326, XP001038571 * das ganze Dokument * | 1-10 | G01N1/20 G01N15/04 |
| A | US 5 085 085 A (ANDERSON ROGER Y) 4. Februar 1992 (1992-02-04) * Spalte 3, Zeile 22-53; Abbildungen * | 1-10 | |
| A,D | DE 295 20 919 U (KERNFORSCHUNGSANLAGE JUELICH) 13. Juni 1996 (1996-06-13) * Abbildungen * | 1-10 | |
| A,D | DE 197 37 448 A (FORSCHUNGSVERBUND BERLIN EV) 25. Februar 1999 (1999-02-25) * Abbildungen * | 1-10 | RECHERCHIERTE SACHGEBIETE (Int.Cl.7) |
| A | US 4 321 823 A (ANDERSON ROGER Y) 30. März 1982 (1982-03-30) * Abbildungen * | 1-10 | G01N B01D |

Der vorliegende Recherchenbericht wurde für alle Patentansprüche erstellt

| Recherchenort | Abschlußdatum der Recherche | Prüfer |
|---|---|---|
| MÜNCHEN | 15. Januar 2002 | Persichini, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

13

**ANHANG ZUM EUROPÄISCHEN RECHERCHENBERICHT
ÜBER DIE EUROPÄISCHE PATENTANMELDUNG NR.**

EP 01 71 0049

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-01-2002

| Im Recherchenbericht angeführtes Patentdokument | | Datum der Veröffentlichung | Mitglied(er) der Patentfamilie | | Datum der Veröffentlichung |
|---|---|---|---|---|---|
| US 5085085 | A | 04-02-1992 | KEINE | | |
| DE 29520919 | U | 13-06-1996 | DE | 29520919 U1 | 13-06-1996 |
| DE 19737448 | A | 25-02-1999 | DE | 19737448 A1 | 25-02-1999 |
| US 4321823 | A | 30-03-1982 | KEINE | | |

EPO FORM P0461

Für nähere Einzelheiten zu diesem Anhang : siehe Amtsblatt des Europäischen Patentamts, Nr.12/82